# EUROPEAN PATENT APPLICATION

(11) **EP 3 432 170 A1**
(43) Date of publication of application: **23.01.2019**
(21) Application number: 16894436.1
(22) Date of filing: 18.03.2016
(51) Int. Cl.: G06F 17/50, B81C 1/00

(54) **DEVICE DESIGNING METHOD AND DEVICE DESIGNING DEVICE**

(71) Applicant: Hitachi, Ltd., Chiyoda-ku Tokyo 100-8280 (JP)
(72) Inventor: KAWAMURA, Tetsufumi, Tokyo 100-8280 (JP); WATANABE, Kazuki, Tokyo 100-8280 (JP); ISOBE, Atsushi, Tokyo 100-8280 (JP); KAMADA, Yuudai, Tokyo 100-8280 (JP); MACHIDA, Shuntaro, Tokyo 100-8280 (JP); SUGII, Nobuyuki, Tokyo 100-8280 (JP); RYUZAKI, Daisuke, Tokyo 100-8280 (JP)
(74) Representative: Strehl Schübel-Hopf & Partner
(86) International application number: PCT/JP2016/058685
(87) International publication number: WO 2017/158818

(57) **Abstract**

Provided is a technology that enables the shortening of the designing period. A device designing method includes a step of extracting a structure compatible with requested characteristics from a database in which each structure of a device is associated with characteristics and a step of outputting the extracted structure and a tuning parameter for adjusting the structure into ranges of the requested characteristics. In regard to each structure parameter determining the structure of the device, characteristics obtained by performing a simulation while exhaustively changing the structure parameter in a manufacturable range and the structure parameter used for the simulation are stored in the database while being associated with each other.

## Description

### Technical Field

The present invention relates to a device designing method and a device designing apparatus.

### Background Art

Patent Document 1 discloses a technology of optimizing the shape of a machine/structure component by laying out basic design based on specifications requested by the customer, performing the modeling of the machine/structure component by use of three-dimensional CAD (computer-aided design), calculating mechanical strength or the like for analysis in regard to a shape model generated as the result of the modeling, and repeating the modeling by use of the three-dimensional CAD until the result of the calculation reaches a prescribed value.

### Prior Art Document

### Patent Document

Patent Document 1: JP-2003-228593-A

### Summary of the Invention

### Problem to be Solved by the Invention

In the aforementioned technology of Patent Document 1, there is a problem in that the designing period is necessitated to be long since the modeling is repeated until the result of the calculation for the analysis reaches the prescribed value in order to obtain the optimum shape of the machine/structure component.

The object of the present invention is to provide a technology that shortens the designing period.

The above and other objects and novel features of the present invention will become apparent from the following description and the accompanying drawings.

### Means for Solving the Problem

Typical ones of the inventions disclosed in the present application will be briefly described as follows.

A device designing method in an embodiment includes the steps of: extracting a structure compatible with requested characteristics from a database in which each structure of a device is associated with characteristics; and outputting the extracted structure and a tuning parameter for adjusting the structure into ranges of the requested characteristics.

A device designing apparatus in an embodiment includes a database in which each structure of a device is associated with characteristics, an extraction unit that extracts a structure compatible with requested characteristics from the database, and an output unit that outputs the structure extracted by the extraction unit and a tuning parameter for adjusting the structure into ranges of the requested characteristics.

### Effect of the Invention

Effect obtained by typical ones of the inventions disclosed in the present application will be briefly described below.

According to an embodiment, the shortening of the designing period becomes possible.

### Brief Description of the Drawings

Fig. 1 is a block diagram showing an example of the hardware configuration of a device designing apparatus in an embodiment.
Fig. 2 is a block diagram showing an example of the software configuration of the device designing apparatus in the embodiment.
Fig. 3 is a flow chart showing a first example of a procedure of a device designing method in the embodiment.
Fig. 4 is a flow chart showing a second example of the procedure of the device designing method in the embodiment.
Fig. 5 is an explanatory drawing showing an example of a physical model of an acceleration sensor in the embodiment.
Fig. 6 is an explanatory drawing showing an example of a design database of the acceleration sensor in the embodiment.
Fig. 7 is an explanatory drawing showing an example of a case of extracting design data close to requested specifications in a characteristic space in the embodiment.
Fig. 8 is an explanatory drawing showing an example of a case of forming clusters in the vicinity of extraction data in a characteristic-structure space in the embodiment.
Fig. 9 is an explanatory drawing showing an example of a case of analyzing characteristics of each cluster and assigning ordinal ranks to the clusters from the viewpoint of ease of manufacture.
Fig. 10 is an explanatory drawing showing an example of a case of analyzing correlation between the structure and the characteristics in the cluster and extracting tuning parameters.
Fig. 11 is an explanatory drawing showing an example of a case of performing a simulation of detailed design according to the result of the correlation analysis in the embodiment.
Fig. 12 is an explanatory drawing showing an example of the requested specifications and design specifications in the embodiment.
Fig. 13 is an explanatory drawing showing an example of an acceleration sensor of a three-dimensional MEMS device in the embodiment.
Fig. 14 is an explanatory drawing showing an example of the configuration of a device processing apparatus in the embodiment.
Fig. 15 is an explanatory drawing showing an example of a procedure of a device processing method in the embodiment.
Fig. 16 is an explanatory drawing showing an example of a processing database in the embodiment.

### Modes for Carrying Out the Invention

The following description of the embodiment will be given while dividing it into a plurality of sections or embodiments as needed for convenience. However, unless otherwise stated, the plurality of sections or embodiments are not irrelevant to each other but in such a relationship that one of them is a modification, details, a supplementary explanation or the like of part or all of another.

Further, when a number such as the number of components (e.g., the number of pieces, a numerical value, an amount or a range) is mentioned in the following embodiment, the number is not limited to the particular number mentioned but may be larger or smaller than the particular number except when the limitation is clearly specified, the number is obviously limited to the particular number in principle, or the like.

Furthermore, it goes without saying that components (including element steps and the like) in the following embodiment are not necessarily essential except when the essentiality of the component is clearly specified, the component is obviously considered to be essential in principle, or the like.

Likewise, when a shape, positional relationship or the like in regard to a component or the like is mentioned in the following embodiment, the shape or the like is intended to include those substantially approximate or similar to the mentioned shape or the like except when limitation to the mentioned shape or the like is clearly specified, the inclusion is obviously considered to be impossible in principle, or the like. The same goes for the aforementioned numerical value and range.

Identical members are basically assigned the same reference character throughout the drawings for illustrating the embodiment and repeated explanation thereof is omitted. Incidentally, for better understanding of the drawings, there are cases where hatching is used even in a plan view or hatching is omitted even in a cross-sectional view.

The embodiment will be described in detail below with reference to the drawings.

### [Embodiment]

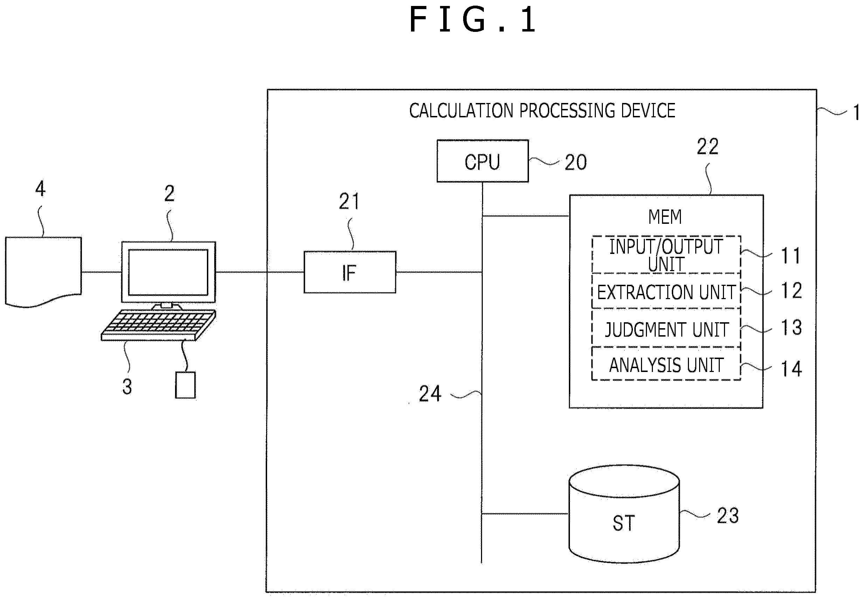

A device designing apparatus and a device designing method in the embodiment and a device processing apparatus and a device processing method will be described below with reference to Fig. 1 to Fig. 16.

In this embodiment, an acceleration sensor of a MEMS (micro electro mechanical systems) device will be described as an example of the device. However, this embodiment is applicable also to other devices and sensors.

### <Device Designing Apparatus>

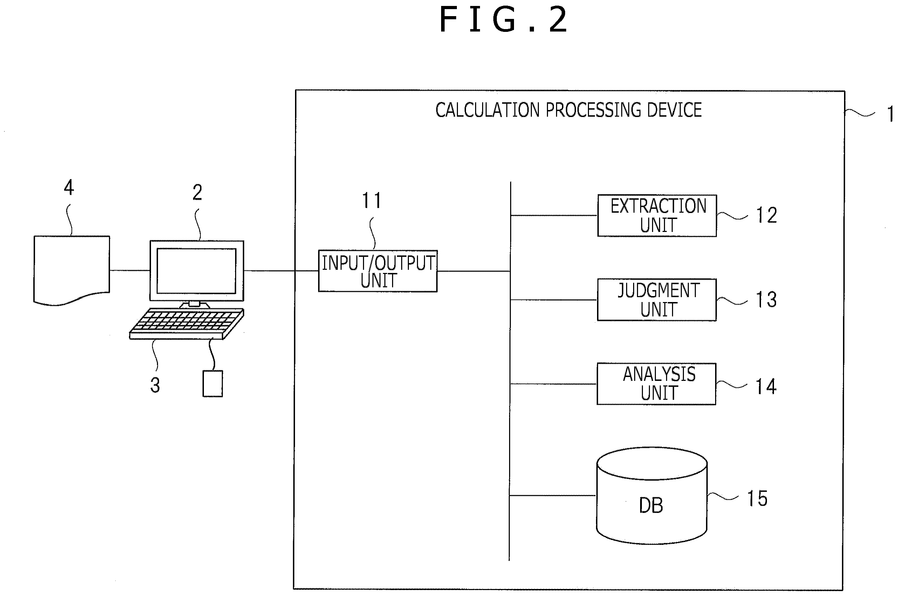

The device designing apparatus in the embodiment will be described below with reference to Fig. 1 and Fig. 2. Fig. 1 is a block diagram showing an example of the hardware configuration of the device designing apparatus in the embodiment. Fig. 2 is a block diagram showing an example of the software configuration of the device designing apparatus in the embodiment.

As shown in Fig. 1, the device designing apparatus in this embodiment is a computer system including hardware such as a calculation processing device 1, a display device 2, an input device 3 and an output device 4. The calculation processing device 1 includes a central processing unit (CPU) 20, a memory (MEM) 22, a storage (ST) 23 as a storage device for storing a design database (DB) 15, an input/output interface (IF) 21, and so forth. These components are connected together by an internal bus 24. The memory (MEM) 22 includes an input/output unit 11, an extraction unit 12, a judgment unit 13, an analysis unit 14, and so forth. The display device 2 is a display, for example. The input device 3 includes a keyboard and a mouse, for example. The output device 4 is a printer, for example.

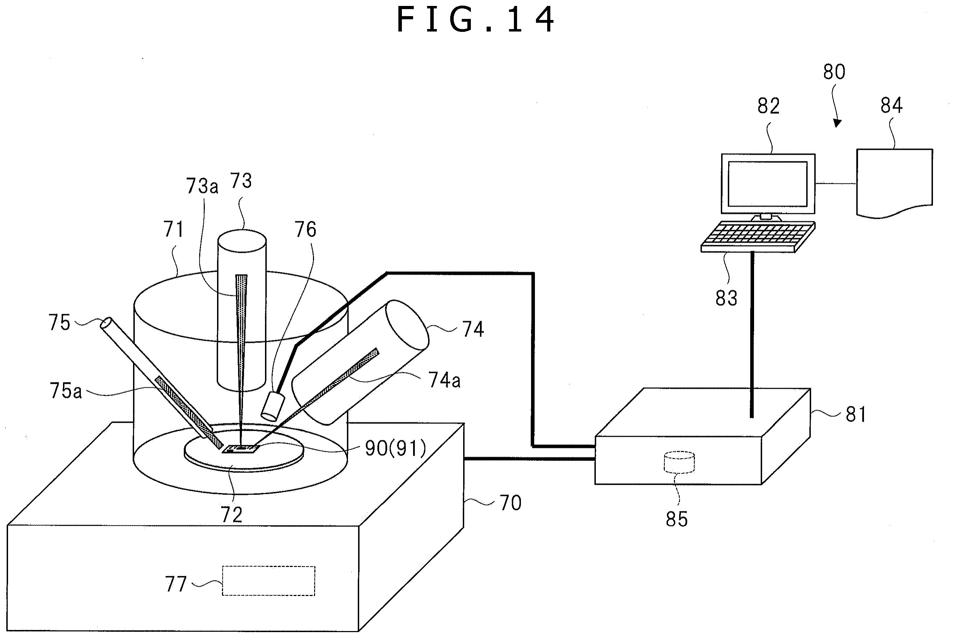

Further, the device designing apparatus is configured so that input and output from/to an external apparatus is possible. As the external apparatus, a device processing apparatus which will be described later (Fig. 14) can be taken as an example. In this case, cooperation of the device designing apparatus and the device processing apparatus becomes possible.

The device designing apparatus forms its functional units by means of software by making the central processing unit 20 in the calculation processing device 1 execute programs stored in the memory 22. For example, the programs stored in the memory 22 are read out from the storage 23 and stored in the memory 22 in a starting stage of a designing process. The storage 23 also stores various data. The various data are also read out from the storage 23 and stored in the memory 22 in the starting stage of the designing process. Other than reading out a program/data from the storage 23 and storing the program/data in the memory 22, it is of course possible to use a program or data already stored in the memory 22.

The functional units of the device designing apparatus by means of software include the input/output unit 11, the extraction unit 12, the judgment unit 13, the analysis unit 14, and so forth as shown in Fig. 2. These functional units share the design database (DB) 15.

The input/output unit 11 is a functional unit that functions as an input unit for inputting requested specifications, including characteristics and ranges of the characteristics, in the device design. The input/output unit 11 is a functional unit that functions as an output unit for outputting a structure extracted by the extraction unit 12 and a tuning parameter for adjusting the structure into the ranges of the requested characteristics. The input/output unit 11 is also a functional unit that outputs a structure and a tuning parameter obtained from the result of correlation analysis performed by the analysis unit 14. The input/output unit 11 is also a functional unit that outputs design data and a tuning parameter in a cluster obtained from the result of cluster analysis performed by the analysis unit 14.

Further, the input/output unit 11 performs processes such as receiving data inputted via the keyboard or the mouse, displaying data on the display, and outputting data to be printed to the printer. Although not illustrated, the input/output unit 11 is also capable of receiving data inputted from an external apparatus via a communication line and outputting data to an external apparatus.

The extraction unit 12 is a functional unit that extracts a structure compatible with the requested characteristics from the design database 15 in the device design. The extraction unit 12 is also a functional unit that extracts one of structures compatible with the requested characteristics from the design database 15. The extraction unit 12 is also a functional unit that narrows down design data of the structures compatible with the requested characteristics from the design database 15.

The judgment unit 13 is a functional unit that judges whether the one structure extracted by the extraction unit 12 is within the ranges of the requested characteristics or not in the device design.

The analysis unit 14 is a functional unit that performs the correlation analysis between the structure and the characteristics in the device design when the extracted one structure is not within the ranges of the requested characteristics as the result of the judgment by the judgment unit 13. The analysis unit 14 is also a functional unit that performs the cluster analysis in regard to the design data narrowed down by the extraction unit 12 and performs the correlation analysis in each cluster formed by the cluster analysis.

The design database 15 is a database in which the structure of a device is associated with characteristics. Specifically, in regard to each structure parameter (e.g., dimension) determining the structure of the device, characteristics obtained by exhaustively performing a simulation in a manufacturable range and the structure parameter used for the simulation are stored in the design database 15 while being associated with each other. Especially, the design database 15 is a database generated by a database constructor by use of a computer by preliminarily performing a simulation exhaustively covering the whole of the manufacturable range so as not to fall into a solution biased towards the designer's empirical rules. Incidentally, the database constructor may either be the same as or different from a designer who lays out detailed design in a later step.

### <Device Designing Method>

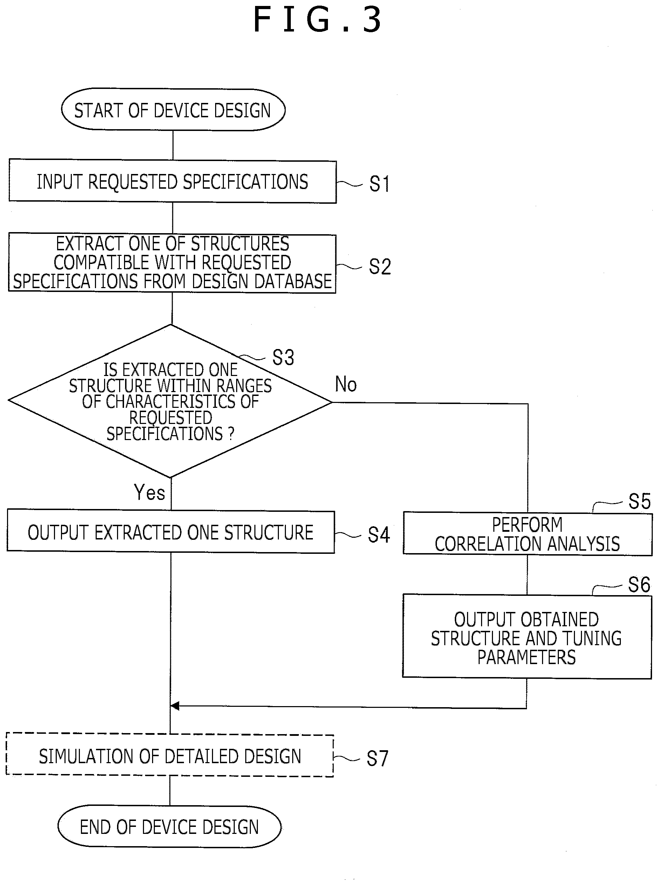

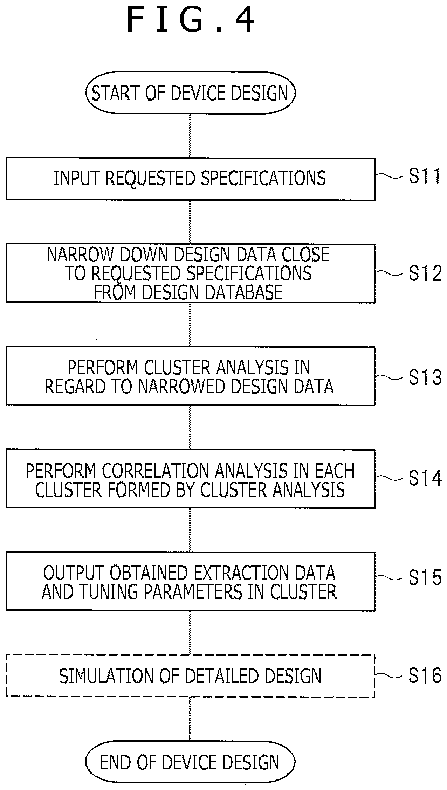

The device designing method in the embodiment will be described below with reference to Fig. 3 and Fig. 4. Fig. 3 is a flow chart showing a first example of a procedure of the device designing method in the embodiment. Fig. 4 is a flow chart showing a second example of the procedure of the device designing method in the embodiment. The device designing method in the embodiment is executed in the device designing apparatus described above.

### <<First Example>>

In the first example of the procedure of the device designing method in this embodiment, the database constructor constructs the design database 15 by using a computer as preliminary work before the start of the device design.

After the start of the device design, first, an input of the requested specifications is received from the designer via the input/output unit 11 of the device designing apparatus (step S1). The requested specifications include characteristics and ranges of the characteristics.

Then, the extraction unit 12 of the device designing apparatus extracts one of structures compatible with the requested specifications from the preliminarily constructed design database 15 (step S2). The structures compatible with the requested specifications are structures within the ranges of the characteristics of the requested specifications.

Subsequently, the judgment unit 13 of the device designing apparatus judges whether or not the extracted one structure is within the ranges of the characteristics of the requested specifications (step S3).

When the extracted one structure is within the ranges of the characteristics as the result of the judgment in the step S3, the input/output unit 11 of the device designing apparatus outputs the extracted one structure (step S4).

In contrast, when the extracted one structure is not within the ranges of the characteristics, the analysis unit 14 of the device designing apparatus performs the correlation analysis (step S5). In the correlation analysis, correlation between each structure parameter constituting a part of the extracted one structure and the characteristics is analyzed and the tuning parameters are extracted.

Then, as the result of the correlation analysis, the input/output unit 11 of the device designing apparatus outputs the obtained structure and tuning parameters (step S6) .

With the above steps, the device designing method utilizing the design database 15 generated by preliminarily performing the simulation exhaustively covering the whole of the manufacturable range is completed. For example, once the requested specifications are inputted by the designer in the step S1, the steps S2 to S6 are automatically carried out by the device designing apparatus described earlier.

Thereafter, in regard to the structure outputted in the step S4, the designer carries out a simulation of the detailed design by means of the finite element method or the like (step S7). In regard to the structure outputted in the step S6, the designer adjusts the structure by using the tuning parameters and carries out the simulation of the detailed design in regard to the adjusted structure (step S7). Incidentally, the simulation of the detailed design may be performed by either the analysis unit 14 or an external apparatus.

In this embodiment, the process from the input of the requested specifications in the step S1 to the end of the simulation of the detailed design in the step S7 may be included in the procedure of the device designing method.

### <<Second Example>>

While an example of extracting one of the structures compatible with the requested specifications from the preliminarily constructed design database 15 in the step S2 was described in the above first example of the procedure of the device designing method, the following second example is also possible. The second example will be described below with reference to Fig. 4.

Also in the second example of the procedure of the device designing method in this embodiment, similarly to the first example, the database constructor constructs the design database 15 by using a computer as preliminary work before the start of the device design as shown in Fig. 4. In the design database 15, each structure of a device is stored while being associated with characteristics.

After the start of the device design, first, an input of the requested specifications is received from the designer via the input/output unit 11 of the device designing apparatus (step S11). The requested specifications include characteristics and ranges of the characteristics.

Then, the extraction unit 12 of the device designing apparatus narrows down design data close to the requested specifications from the preliminarily constructed design database 15 (step S12). The design data close to the requested characteristics are design data within prescribed ranges in regard to the requested characteristics in a characteristic space.

Subsequently, the analysis unit 14 of the device designing apparatus performs the cluster analysis in regard to the narrowed design data (step S13). In the cluster analysis, a plurality of clusters are formed by classifying the design data in a characteristic-structure space.

Further, the analysis unit 14 of the device designing apparatus performs the correlation analysis in each cluster formed by the cluster analysis (step S14). In the correlation analysis, the analysis unit 14 analyzes the correlation between each structure parameter and the characteristics in each cluster and extracts the tuning parameters.

Then, as the result of the correlation analysis, the input/output unit 11 of the device designing apparatus outputs the obtained extraction data and tuning parameters in each cluster (step S15).

In the above-described steps S11 to S15, once the requested specifications are inputted by the designer in the step S11, the steps S12 to S15 are automatically carried out by the device designing apparatus described earlier, for example.

Thereafter, the designer carries out the simulation of the detailed design by means of the finite element method or the like by using the outputted extraction data and tuning parameters in each cluster (step S16). In the simulation of the detailed design, the designer adjusts the structure in conformity with the extraction data in each cluster by using the tuning parameters and carries out the simulation of the detailed design in regard to the adjusted structure. Incidentally, the simulation of the detailed design may be performed by either the analysis unit 14 or an external apparatus.

The second example has an advantage in that the device design hardly falls into a local solution since a plurality of clusters are formed and analyzed. For example, in cases where one structure compatible with the requested specifications is extracted, there is a possibility of falling into a local solution since only one structure is the candidate. In contrast, by forming and analyzing a plurality of clusters as in the second example, desirable design data and tuning parameters can be selected from some candidates, and thus the device design hardly falls into a local solution.

In such cases where the desirable design data and tuning parameters are selected from some candidates in the second example, the selection may be made either by the extraction unit 12 of the device designing apparatus or by the designer's judgment.

In the following, a detailed explanation will be given of the design database, the cluster analysis, the correlation analysis and the simulation of the detailed design in the first example and the second example of the procedure of the device designing method in this embodiment.

### <Design Database>

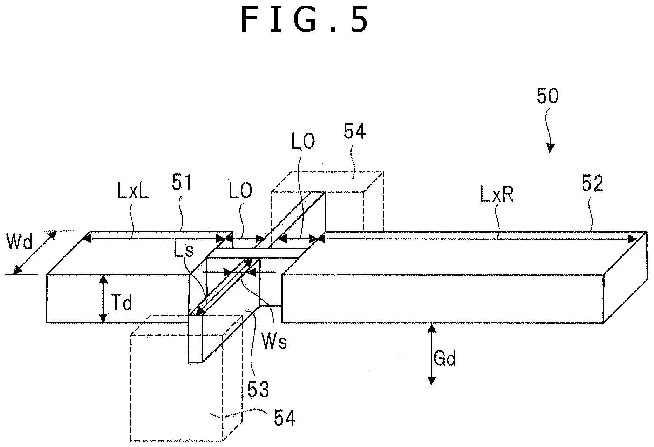

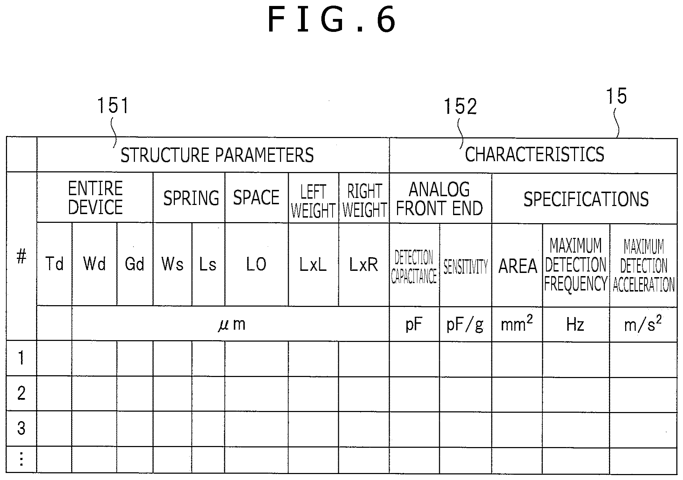

The design database in the embodiment will be described below with reference to Fig. 5 and Fig. 6. Fig. 5 is an explanatory drawing showing an example of a physical model of the acceleration sensor. Fig. 6 is an explanatory drawing showing an example of the design database of the acceleration sensor.

As shown in Fig. 5, the physical model of the acceleration sensor 50 is a seesaw type device structure made by connecting a left weight 51 and a right weight 52 with a spring 53. The spring 53 has a cross shape in a plan view, has a pair of opposing ends connected respectively to the left weight 51 and the right weight 52, and has the other pair of opposing ends connected respectively to fixation parts 54 for the fixation to a substrate. In Fig. 5, the reference character Td represents the thickness of the entire device, Wd represents the width of the entire device, and Gd represents the gap between the device and an electrode. The reference character Ws represents the width of the spring 53 and Ls represents the length of the spring 53. The reference character Lo represents the space between the spring 53 and the left and right weights 51 and 52. The reference character LxL represents the length of the left weight 51. The reference character LxR represents the length of the right weight 52.

As shown in Fig. 6, in the design database 15 of the acceleration sensor, structure parameters 151 are stored while being associated with characteristics 152. The structure parameters 151 include the thickness Td, the width Wd and the gap Gd of the entire device, the width Ws and the length Ls of the spring 53, the space LO between the spring 53 and the left and right weights 51 and 52, the length LxL of the left weight 51, and the length LxR of the right weight 52. The characteristics 152 include detection capacitance and sensitivity of an analog front end and an area, a maximum detection frequency and a maximum detection acceleration as specifications.

For example, the design database 15 of the acceleration sensor is of a scale of approximately one million conditions. In such cases where the design database 15 of the acceleration sensor is of a scale of approximately one million conditions, the database constructor constructs a physical model represented by approximately ten types of structure parameters and constructs the database of approximately one million conditions by mechanically modifying the approximately ten types of structure parameters by using a computer or the like.

### <Cluster Analysis>

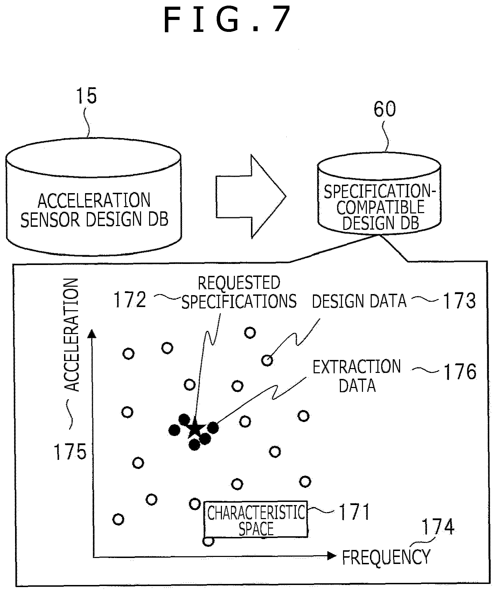

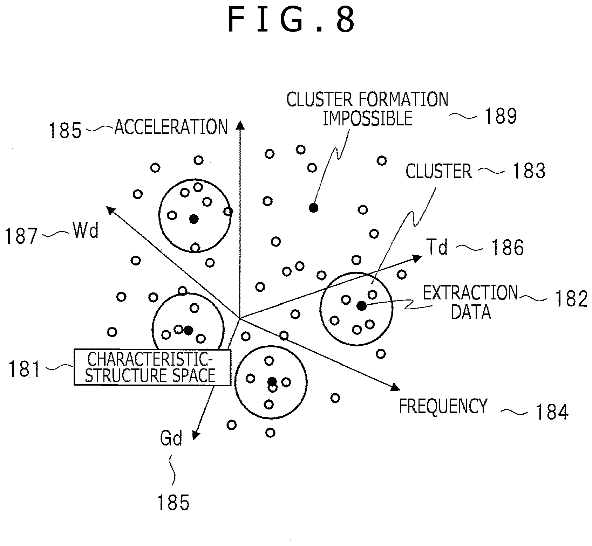

The cluster analysis in the embodiment will be described below with reference to Fig. 7 and Fig. 8. Fig. 7 is an explanatory drawing showing an example of a case of extracting the design data close to the requested specifications in the characteristic space. Fig. 8 is an explanatory drawing showing an example of a case of forming clusters in the vicinity of the extraction data in the characteristic-structure space.

As shown in Fig. 7, in cases of extracting design data 173 close to the requested specifications 172 in the characteristic space 171, the extraction unit 12 of the device designing apparatus extracts the design data 173 close to the requested specifications 172 from the design data 173 stored in the design database 15 of the acceleration sensor in the characteristic space 171 having axes of the frequency 174 and the acceleration 175. The extracted design data will be referred to as extraction data 176. In this example, five pieces of extraction data 176 have been extracted. The design data 173 close to the requested specifications 172 means design data 173 within a range of requested specifications 172 ±10%, for example. A database storing the design data 173 close to the requested specifications 172 will be referred to as a specification-compatible design database 60.

As shown in Fig. 8, in cases of forming clusters 183 in the vicinity of the extraction data 182 in the characteristic-structure space 181, the analysis unit 14 of the device designing apparatus forms clusters 183, each including multiple pieces of design data close to a corresponding one of the five pieces of extraction data 182, from the whole design data in the characteristic-structure space 181 having axes of the frequency 184 and the acceleration 185, the thickness Td 186, the width Wd 187 and the gap Gd 188 of the entire device, the width Ws (not shown in Fig. 8) and the length Ls (not shown in Fig. 8) of the spring, the space LO (not shown in Fig. 8), the length LxL of the left weight (not shown in Fig. 8) and the length LxR of the right weight (not shown in Fig. 8). In this example, four clusters 183 have been formed in regard to four pieces of extraction data 182 among the five pieces of extraction data 182. In regard to a piece of extraction data 182, it is impossible to form a cluster 183 since there is no design data close to the extraction data 182 (cluster formation impossible 189).

In the case where the design database 15 of the acceleration sensor is constructed with approximately one million conditions the extraction unit 12 of the device designing apparatus forms the specification-compatible design database 60 by extracting extraction data of approximately ten thousand conditions and the analysis unit 14 of the device designing apparatus forms four clusters each including approximately 15 conditions, for example.

### <Correlation Analysis>

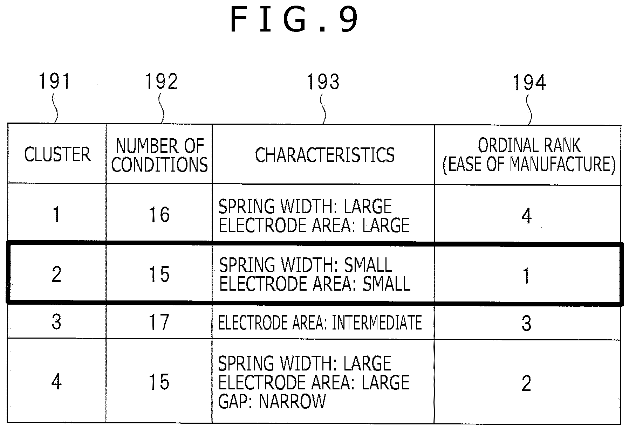

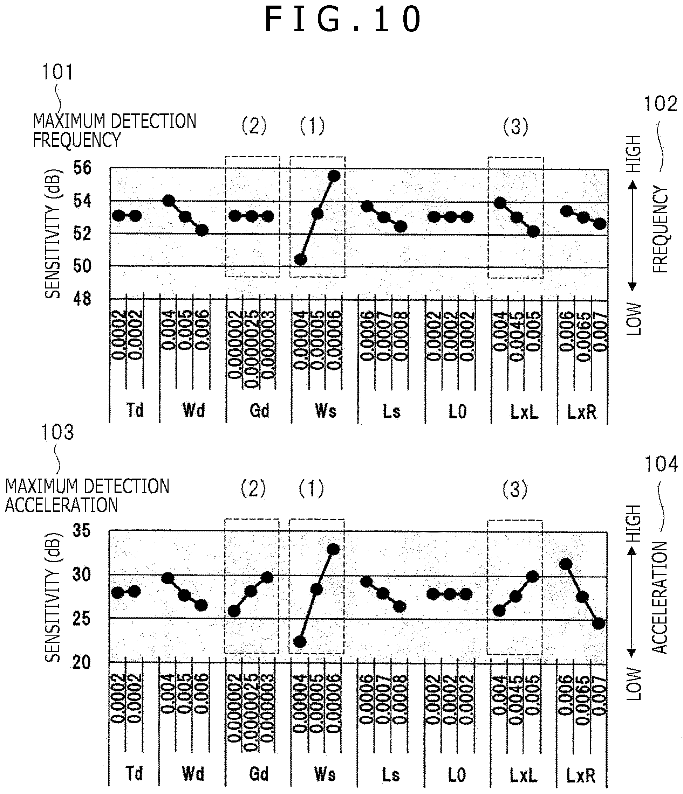

The correlation analysis in the embodiment will be described below with reference to Fig. 9 and Fig. 10. Fig. 9 is an explanatory drawing showing an example of a case of analyzing the characteristics of each cluster and assigning ordinal ranks to the clusters from the viewpoint of ease of manufacture. Fig. 10 is an explanatory drawing showing an example of a case of analyzing the correlation between the structure and the characteristics in the cluster and extracting the tuning parameters. In the correlation analysis, an analysis method such as the so-called Taguchi method is used, for example.

As shown in Fig. 9, in cases of analyzing the characteristics of each cluster, the analysis unit 14 of the device designing apparatus analyzes the characteristics 193 of each (1 to 4) of the four clusters 191 in consideration of factors such as the number 192 of conditions, and then assigns ordinal ranks 194 to the clusters from the viewpoint of ease of manufacture (time, difficulty). For example, in the cluster 191-1, the number 192 of conditions is 16 and the characteristics 193 include a large spring width and a large electrode area. In the cluster 191-2, the number 192 of conditions is 15 and the characteristics 193 include a small spring width and a small electrode area. In the cluster 191-3, the number 192 of conditions is 17 and the characteristics 193 include an intermediate electrode area. In the cluster 191-4, the number 192 of conditions is 15 and the characteristics 193 include a large spring width, a large electrode area and a narrow gap. Based on the characteristics 193 of each (1 to 4) of the clusters 191, the ordinal ranks 194 from the viewpoint of ease of manufacture are assigned in the order of the cluster 2, the cluster 4, the cluster 3 and the cluster 1.

For example, when four clusters 191 each including approximately 15 conditions (63 conditions in total) have been formed, one condition of the extraction data in the cluster 191 at the first ordinal rank 194 is extracted.

As shown in Fig. 10, in cases of analyzing the correlation between the structure and the characteristics in a cluster, the analysis unit 14 of the device designing apparatus analyzes the correlation between the structure parameters and the characteristics in regard to the extraction data in the cluster at the first ordinal rank and then extracts the tuning parameters.

In the example of Fig. 10, characteristics of the maximum detection frequency and the maximum detection acceleration are shown as an example. In Fig. 10, the horizontal axis represents the design data of the structure parameters, the vertical axis represents the sensitivity, and the sensitivity is plotted with respect to each piece of design data of the structure parameters. In the characteristic of the maximum detection frequency 101, when the vertical axis is associated with the frequency 102, an upper part of the vertical axis corresponds to high frequencies and a lower part of the vertical axis corresponds to low frequencies. In the characteristic of the maximum detection acceleration 103, when the vertical axis is associated with the acceleration 104, an upper part of the vertical axis corresponds to high acceleration and a lower part of the vertical axis corresponds to low acceleration.

In Fig. 10, the structure parameters indicated along the horizontal axis are those corresponding to the device as the acceleration sensor 50 shown in Fig. 5.

Based on the correlation analysis between the structure and the characteristics in a cluster shown in Fig. 10, the following interpretations hold:

As an interpretation (1), if characteristics other than the maximum detection acceleration 103 are not taken into consideration, the maximum detection acceleration 103 can be easily adjusted by adjusting the width Ws of the spring 53. However, the maximum detection frequency 101 also becomes high. Increasing the width Ws of the spring 53 like 0.00004 → 0.00005 → 0.00006 increases the frequency 102; however, the acceleration 104 also increases. Thus, the width Ws of the spring 53 can be a tuning parameter in cases of adjusting the acceleration 104.

As an interpretation (2), when it is desired to adjust only the maximum detection acceleration 103 without changing the maximum detection frequency 101, adjusting the gap Gd of the entire device is more efficient. Increasing the gap Gd of the entire device like 0.000002 → 0.0000025 → 0.000003 does not change the frequency 102 but increases the acceleration 104, and thus the gap Gd of the entire device can be a tuning parameter in cases of adjusting the acceleration.

As an interpretation (3), when it is desired to increase the maximum detection acceleration 103 and decrease the maximum detection frequency 101, adjusting the length LxL of the left weight 51 is efficient. Increasing the length LxL of the left weight 51 like 0.004 → 0.0045 → 0.005 decreases the frequency 102 and increases the acceleration 104, and thus the length LxL of the left weight 51 can be a tuning parameter in cases of making an adjustment to increase the acceleration 104 and decrease the frequency 102.

Based on these interpretations, the width Ws of the spring 53, the gap Gd of the entire device and the length LxL of the left weight 51 are extracted as the tuning parameters.

### <Detailed Design>

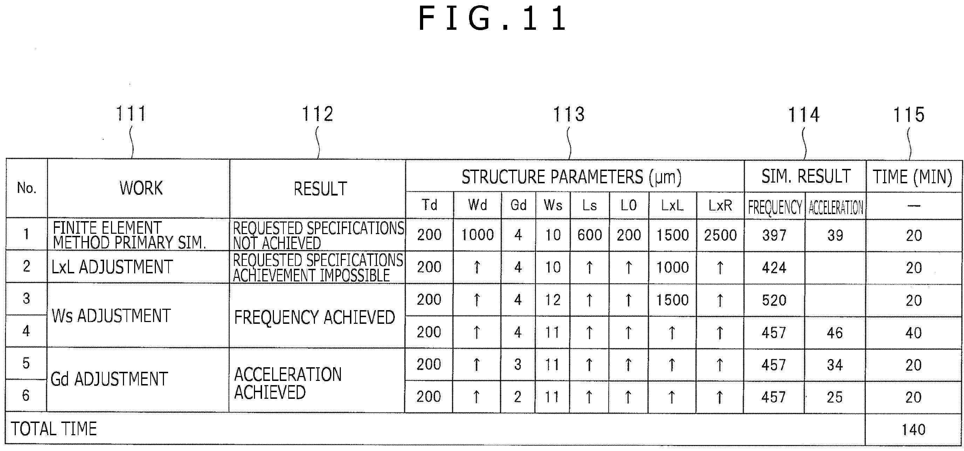

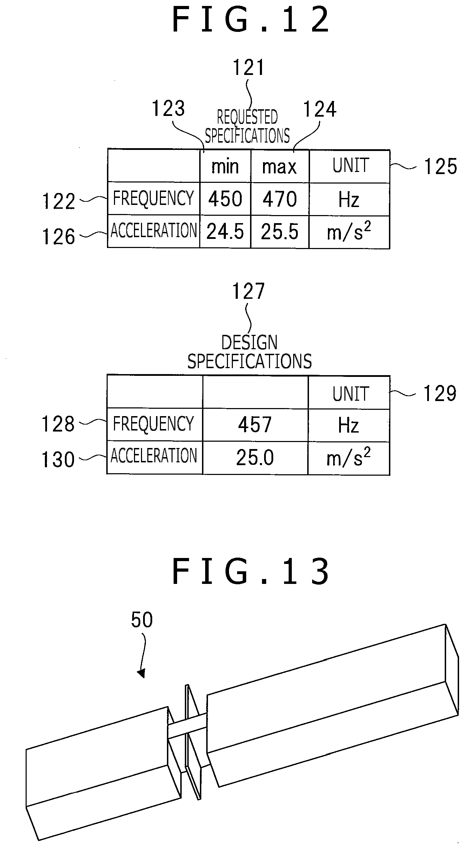

The detailed design in the embodiment will be described below with reference to Fig. 11 to Fig. 13. Fig. 11 is an explanatory drawing showing an example of a case of performing a simulation necessary for the detailed design according to the result of the correlation analysis. Fig. 12 is an explanatory drawing showing an example of the requested specifications and design specifications. Fig. 13 is an explanatory drawing showing an example of an acceleration sensor of a three-dimensional MEMS device.

As shown in Fig. 11, in cases of laying out the detailed design according to the result of the correlation analysis, the designer performs the simulation necessary for the detailed design by means of the finite element method or the like according to the result of the correlation analysis successively from the cluster at the first ordinal rank. Fig. 11 shows work 111, result 112, structure parameters 113, simulation (SIM.) result 114 and time 115.

As shown in Fig. 12, in the requested specifications 121, in regard to the frequency 122 (unit 125: Hz), a lower limit value (min) 123 is "450" and an upper limit value (max) 124 is "470." Namely, the range of the frequency 122 is "450" to "470" (Hz). In regard to the acceleration 126 (unit 125: m/s²), a lower limit value (min) 123 is "24.5" and an upper limit value (max) 124 is "25.5." Namely, the range of the acceleration 126 is "24.5" to "25.5" (m/s²).

In the simulation of the detailed design, in the work 111 of primary simulation by means of the finite element method, the result 112 was requested specifications not achieved. As the structure parameters 113 (unit: µm) in this case, the thickness Td, the width Wd and the gap Gd of the entire device are "200," "1000" and "4," the width Ws and the length Ls of the spring 53 are "10" and "600," the space Ls is "200," the length LxL of the left weight 51 is "1500," and the length LxR of the right weight 52 is "2500." As the simulation result 114, the frequency (unit: Hz) is "397" and the acceleration (unit: m/s²) is "39." The time (unit: min) 115 is "20."

In the work 111 of adjustment of the length LxL of the left weight 51, the result 112 was requested specifications achievement impossible. In the structure parameters 113 in this case, the length LxL of the left weight 51 is "1000." In the simulation result 114, the frequency is "424." The time 115 is "20."

In the work 111 of adjustment of the width Ws of the spring 53, the result 112 was frequency achieved. In the structure parameters 113 in this case, the width Ws of the spring 53 is "12." In the simulation result 114, the frequency is "520." The time 115 is "20." In a case where the width Ws of the spring 53 is "11," the frequency is "457" and the time 115 is "40."

In the work 111 of adjustment of the gap Gd, the result 112 was acceleration achieved. In the structure parameters 113 in this case, the gap Gd is "3." In the simulation result 114, the acceleration is "34." The time 115 is "20." In a case where the gap Gd is "2," the acceleration is "25" and the time 115 is "20."

The total time necessary for the work in the case of laying out the detailed design according to the result of the correlation analysis as above is "140" minutes.

As the result of the simulation of the detailed design, the design specifications 127 were as shown in Fig. 12, in which the frequency 128 (unit 129: Hz) was "457" and the acceleration 130 (unit 129: m/s²) was "25.0." The structure of this acceleration sensor 50 of the three-dimensional MEMS device was as shown in Fig. 13 (the fixation parts 54 are not shown in Fig. 13).

### <Device Processing Apparatus>

The device processing apparatus in the embodiment will be described below with reference to Fig. 14. Fig. 14 is an explanatory drawing showing an example of the configuration of the device processing apparatus.

As shown in Fig. 14, the device processing apparatus in the embodiment includes a so-called FIB-SEM apparatus 70, as a combined apparatus of an FIB and a SEM (scanning electron microscope), and a computer system 80. The computer system 80 is capable of cooperating with the computer system of the above-described device designing apparatus. For example, it is possible for the computer system 80 to connect and cooperate with the computer system of the above-described device designing apparatus, or to be configured to include the functions of the device designing apparatus.

The FIB-SEM apparatus 70 includes a vacuum chamber 71, a stage 72, an ion gun 73, an electron gun 74, a gas gun 75, a charged particle detector 76, a control unit 77, and so forth. The components of the FIB-SEM apparatus 70 are controlled by the control unit 77.

The vacuum chamber 71 is a chamber for performing the processing of devices 91 manufactured on a substrate 90, such as cutting (etching), deposition (film formation) and joining, observation of the device 91 after the processing, and so forth. The stage 72 is situated in the vacuum chamber 71 as a stage on which the substrate 90 for manufacturing the devices 91 is set.

The ion gun 73 is situated in the vacuum chamber 71 to be used for the cutting, the deposition, the joining and SIM image acquisition by use of an ion beam 73a. The electron gun 74 is situated in the vacuum chamber 71 to be used for SEM image acquisition by use of an electron beam 74a. The gas gun 75 is situated in the vacuum chamber 71 to be used for the cutting, the deposition, the joining by use of a gas 75a.

The charged particle detector 76 is a detector used for the SIM image acquisition or the SEM image acquisition. The control unit 77 is a unit for controlling movement of the stage 72, emission of the ion beam 73a from the ion gun 73, emission of the electron beam 74a from the electron gun 74, emission of the gas 75a from the gas gun 75, and so forth.

The computer system 80 includes a calculation processing device 81, a display device 82, an input device 83, an output device 84, and so forth. The calculation processing device 81 includes a processing database 85. The computer system 80 is a system that commands the control unit 77 of the FIB-SEM apparatus 70 to perform the processing, observation, etc. of a device.

In the computer system 80, measurement of dimensions is performed by using a SIM image or a SEM image in the observation, for example, and processes such as comparison with design data are performed by the calculation processing device 81. The display device 82 displays a SIM image, a SEM image or the like. The input device 83 inputs information such as conditions of processing or observation according to operations by the designer. The output device 84 outputs information such the result of processing or observation. The processing database 85 stores the design data in the above-described device designing apparatus, processing data to be used for performing the processing based on the design data, and so forth.

In the device processing apparatus in this embodiment, after the information such as the conditions of processing or observation is inputted, the processing, the observation or the like is performed automatically based on the information such as the conditions, for example.

### <Device Processing Method>

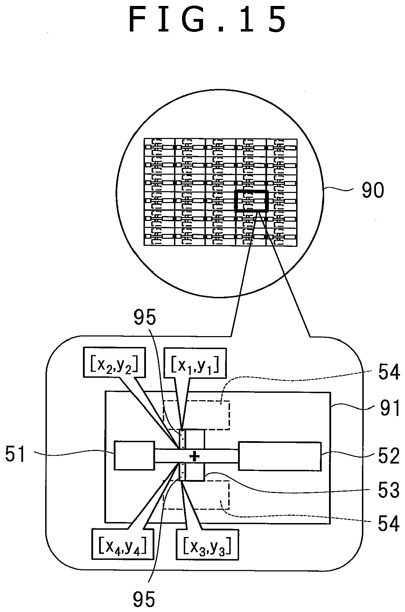

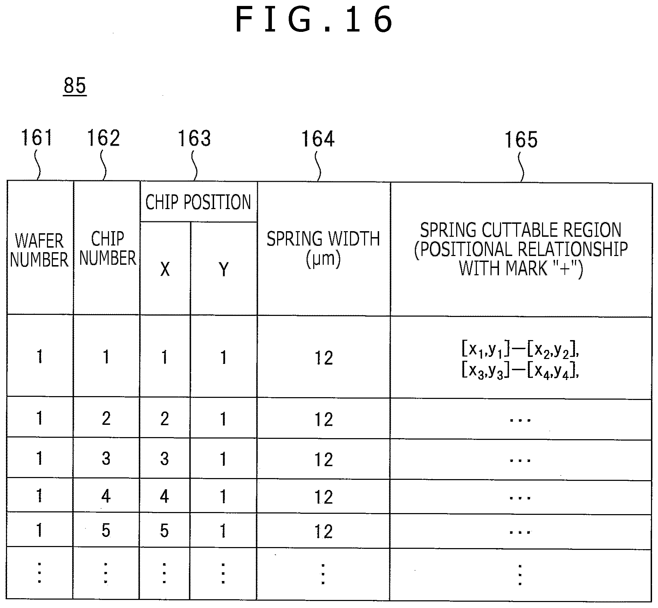

The device processing method in the embodiment will be described below with reference to Fig. 15 and Fig. 16. Fig. 15 is an explanatory drawing showing an example of a procedure of the device processing method. Fig. 16 is an explanatory drawing showing an example of the processing database.

In the device processing method in this embodiment, additional processing of adjusting the structure outputted by the above-described device designing method by using the tuning parameters is performed in the above-described device processing apparatus.

For example, as shown in Fig. 15, the device processing apparatus selects one of chips in the structure previously formed on the wafer of the substrate 90 and obtains an intended device 91 by performing the additional processing on the selected chip. In the selection of one of the chips in the structure previously formed on the wafer of the substrate 90, the device processing apparatus selects a chip having the structure outputted by the device designing method described above. For example, in each chip on the wafer, an acceleration sensor having structure like that shown in Fig. 5, including the left weight 51 and the right weight 52 connected together by the spring 53, has been formed. When the additional processing is performed on the chip having the selected structure, the additional processing is performed by the FIB-SEM apparatus 70 in regard to a tuning parameter outputted by the device designing method described above. It is assumed here that the width of the spring 53 has been outputted as the tuning parameter, for example.

The additional processing includes processing methods such as the cutting, the deposition and the joining (adhesion), for example. Fig. 15 shows an example of performing the cutting in order to reduce the width of the spring 53. In Fig. 15, a cuttable region 95 into the spring 53 and a mark "+" as a reference position of the additional processing are shown in regard to the device 91 as the acceleration sensor. The cuttable region 95 into the spring 53 is judged based on the processing database 85 like the one shown in Fig. 16. The processing database 85 shown in Fig. 16 stores a wafer number 161, a chip number 162, a chip position (X coordinate, Y coordinate) 163, a spring width 164 and a spring cuttable region (positional relationship with the mark "+") 165 while associating them with each other. In the example of Fig. 16, the coordinate region [x₁, y₁] - [x₂, y₂] and the coordinate region [x₃, y₃] - [x₄, y₄], stored in the spring cuttable region 165 as the positional relationship with the mark "+" as the reference position of the additional processing, are the cuttable regions 95 for reducing the width of the spring 53. By performing the additional processing by means of the cutting, the device 91 as the acceleration sensor within the ranges of the characteristics of the requested specifications can be obtained.

In the additional processing, the spring constant can be reduced by the cutting performed by the FIB-SEM apparatus 70 to reduce the width of the spring 53. In cases where the deposition is performed in the additional processing other than the cutting, it is also possible, for example, to have the FIB-SEM apparatus 70 deposit a film on the left weight 51 and the right weight 52 and thereby increase the mass of the left weight 51 and the right weight 52. It is also possible to increase the mass of the left weight 51 and the right weight 52 by having the FIB-SEM apparatus 70 join previously prepared members respectively to the left weight 51 and the right weight 52.

### <Effect>

According to this embodiment described above, the shortening of the designing period becomes possible in the device design. Accordingly, the total number of man-hours of the trial manufacture from the start of the device design to the end of the additional processing for the characteristic tuning can be reduced to a short TAT (turn around time).

More specifically, device design not biased towards the designer's empirical rules can be realized by utilizing the design database 15 generated by preliminarily performing the simulation exhaustively covering the whole of the manufacturable range. In other words, device design not falling into a solution biased towards the designer's empirical rules can be realized.

Further, the characteristics of the device can be tuned to those within the ranges of the requested specifications by extracting the specification-compatible design database 60 from the design database 15 according to the requested specifications, classifying the specification-compatible design database 60 by the cluster analysis, grasping the characteristics of each cluster by utilizing the correlation analysis for each cluster, and adjusting the structure by using the obtained tuning parameters.

Consequently, selection of optimum device structure by means of the cluster analysis and the correlation analysis and characteristic tuning with a small number of times of performing the detailed design simulation become possible and the designing period can be shortened significantly. In other words, the number of man-hours for the trial manufacture of the device can be reduced to a short TAT.

While the invention made by the present inventors has been described above specifically based on the embodiment, it goes without saying that the present invention is not restricted to the above-described embodiment and a variety of modifications are possible within the range not departing from the gist of the invention.

For example, while a MEMS device has been described as an example of the device in the above embodiment, the present invention is applicable also to other devices and the like. Further, while an acceleration sensor has been described as an example of the MEMS device, the present invention is applicable also to other sensors and the like.

Incidentally, the present invention is not restricted to the above-described embodiment but contains a variety of modifications. For example, the above-described embodiment, which has been described in detail for clear and easy explanation of the present invention, is not necessarily limited to those including all the components described above.

Further, it is possible to make addition of another configuration, deletion, or replacement in regard to part of the configuration of the embodiment.

### Description of Reference Characters

- 1:: Calculation processing device
- 11:: Input/output unit
- 12:: Extraction unit
- 13:: Judgment unit
- 14:: Analysis unit
- 15:: Design database
- 50:: Acceleration sensor
- 51:: Left weight
- 52:: Right weight
- 53:: Spring
- 54:: Fixation part
- 60:: Specification-compatible design database
- 70:: FIB-SEM apparatus
- 80:: Computer system

## Claims

1. A device designing method comprising the steps of:
extracting a structure compatible with requested characteristics from a database in which each structure of a device is associated with characteristics; and
outputting the extracted structure and a tuning parameter for adjusting the structure into ranges of the requested characteristics.

2. The device designing method according to claim 1, wherein in regard to each structure parameter determining the structure of the device, characteristics obtained by performing a simulation while exhaustively changing the structure parameter in a manufacturable range and the structure parameter used for the simulation are stored in the database while being associated with each other.

3. The device designing method according to claim 2, wherein:
the step of extracting the structure compatible with the requested characteristics from the database extracts one of structures compatible with the requested characteristics from the database, and
the step of outputting the extracted structure and the tuning parameter includes the steps of:
judging whether the extracted one structure is within the ranges of the requested characteristics;
performing correlation analysis between the structure and the characteristics when the extracted one structure is not within the ranges of the requested characteristics as the result of the judgment;
outputting a structure and a tuning parameter obtained as the result of the correlation analysis.

4. The device designing method according to claim 3, further comprising the step of adjusting the structure outputted as the result of the correlation analysis by using the tuning parameter and performing a simulation of detailed design in regard to the adjusted structure.

5. The device designing method according to claim 2, wherein:
the step of extracting the structure compatible with the requested characteristics from the database narrows down design data of structures compatible with the requested characteristics from the database, and
the step of outputting the extracted structure and the tuning parameter includes the steps of:
performing cluster analysis in regard to the narrowed design data;
performing correlation analysis in each cluster formed by the cluster analysis; and
outputting design data and a tuning parameter in the cluster obtained as the result of the correlation analysis.

6. The device designing method according to claim 5, further comprising the step of adjusting the structure in conformity with the design data in the cluster outputted as the result of the correlation analysis by using the tuning parameter and performing a simulation of detailed design in regard to the adjusted structure.

7. The device designing method according to claim 5, wherein:
the narrowed design data are design data of structures compatible with the requested characteristics extracted in a characteristic space having axes of the characteristics regarding the requested characteristics, and
in regard to the narrowed design data, the cluster analysis forms clusters in the vicinity of the narrowed design data in a characteristic-structure space having axes of the characteristics regarding the requested characteristics and the parameters of the structure.

8. The device designing method according to claim 7, wherein the correlation analysis extracts the tuning parameter by analyzing characteristics of each cluster formed by the cluster analysis, assigning ordinal ranks to the clusters from the viewpoint of ease of manufacture, and analyzing correlation between the structure and the characteristics in each of the clusters.

9. The device designing method according to claim 2, wherein the device is a MEMS device.

10. A device designing apparatus comprising:
a database in which each structure of a device is associated with characteristics;
an extraction unit that extracts a structure compatible with requested characteristics from the database; and
an output unit that outputs the structure extracted by the extraction unit and a tuning parameter for adjusting the structure into ranges of the requested characteristics.

11. The device designing apparatus according to claim 10, wherein in regard to each structure parameter determining the structure of the device, characteristics obtained by performing a simulation while exhaustively changing the structure parameter in a manufacturable range and the structure parameter used for the simulation are stored in the database while being associated with each other.

12. The device designing apparatus according to claim 11, wherein:
the extraction unit extracts one of structures compatible with the requested characteristics from the database,
the device designing apparatus further comprises:
a judgment unit that judges whether the one structure extracted by the extraction unit is within the ranges of the requested characteristics; and
an analysis unit that performs correlation analysis between the structure and the characteristics when the extracted one structure is not within the ranges of the requested characteristics as the result of the judgment by the judgment unit, and
the output unit outputs a structure and a tuning parameter obtained by the analysis unit from the result of the correlation analysis.

13. The device designing apparatus according to claim 11, wherein:
the extraction unit narrows down design data of structures compatible with the requested characteristics from the database,
the device designing apparatus further comprises an analysis unit that performs cluster analysis in regard to the design data narrowed by the extraction unit and performs correlation analysis in each cluster formed by the cluster analysis, and
the output unit outputs design data and a tuning parameter in the cluster obtained by the analysis unit from the result of the correlation analysis.

14. The device designing apparatus according to claim 11, wherein the device is a MEMS device.
